# EUROPEAN PATENT APPLICATION

(11) **EP 3 457 349 A1**
(43) Date of publication of application: **20.03.2019**
(21) Application number: 18190918.5
(22) Date of filing: 27.08.2018
(51) Int. Cl.: G06Q 50/12

(54) **SYSTEM AND METHOD OF REQUESTING SERVICE USING VIRTUAL BUTTONS BASED ON APPLICATION**

(30) Priority: 08.09.2017 KR 20170115273
(71) Applicant: HELLOFACTORY Co., Ltd., Seoul 06314 (KR)
(72) Inventor: KIM, Kyungmin, 05268 Seoul (KR); KIM, Hyun Jip, 06800 Seoul (KR)
(74) Representative: ABG Intellectual Property Law, S.L.

(57) **Abstract**

A service requesting system using a virtual button according to an embodiment of the present invention may include: a Bluetooth signal generator transferring a store code to a user device; a user device executing a virtual button application, retransmitting the store code to a server, receiving virtual buttons in association with the store code, displaying an operation requesting screen for receiving a table number, and receiving the table number and button selection information and providing the same to the server; a server searching for virtual buttons in association with the store code and transmitting the same to the user device a, receiving the table number, the button selection, and transmitting the same to a staff device; a staff device receiving from the server the table number and the button selection information; and a paging button transmitting the table number to the user device

## Description

### Technical Field

Various embodiments of the present invention relate to a system and a method of paging a store staff, making an order, and transferring a request by using a virtual button displayed on a user device. More particularly, various embodiments of the present invention relate to a system and method of transmitting a paging signal and transferring service request when paging a staff in a store by using a virtual button application including a virtual button where service contents are described therein for each store.

### Background Art

In order to page staffs or managers or request a service in places such as restaurants, hospitals, hotels, etc., a paging button is widely used. Herein, as a method of operating a paging button, a RF (AM or FM) signal transmission method, a method of transmitting a beacon signal based on a low power Bluetooth technique, etc. are used. However, a conventional method of paging a staff in a store by using a paging button merely transfers a paging signal without notifying about the reason of the paging request, and thus a service corresponding to the paging request is provided in various steps. For example, when a customer pages a staff, the staff moves to a table where the customer is present, and receives service requirement from the customer. Then, to provide the corresponding service, the staff moves again to the table where the customer is present. As described above, when a staff is called out in the store by using a conventional method, unnecessary time and cost are required. In addition, a hardware device has to be attached on the table for a paging request and for transferring requests.

### Documents of Related Art

### [Patent Document]

(Patent Document 1) Korean Patent Application Publication No. 10-2012-0074271

### Disclosure

### Technical Problem

Accordingly, the present invention has been made keeping in mind the above problems occurring in the prior art, and an object of the present invention is to provide a method and a system capable of providing a virtual button to a user device for transmitting a paging signal and a requirement requested by the user in the paging signal when a customer present in a specific store pages a staff by using a paging button, and thus paging the staff or requesting a service by using a virtual button without using an additional hardware.

### Technical Solution

According to an embodiment of the present invention, a system for requesting a service by using a virtual button may include: a Bluetooth signal generator transferring a store code to a user device; a user device executing a virtual button application, retransmitting the store code to a server when receiving the store code while the virtual button application being operated, receiving from the server virtual buttons in association with the store code, displaying an operation requesting screen for receiving a table number when one button is selected from the virtual buttons, and receiving the table number and button selection information and providing the same to the server; a server searching for virtual buttons in association with the store code received from the user device and transmitting the same to the user device a, and transmitting to a staff device the table number, the button selection information when the same is received; a staff device receiving from the server the table number and the button selection information; and a paging button transmitting the table number to the user device.

According to an embodiment of the present invention, a method of requesting a service may include: executing, by a user device, a virtual button application; receiving, by the user device, a store code included in a beacon signal generated by a Bluetooth signal generator; searching, by a server, for store virtual button information corresponding to the store code when the store code is received from the user device; transmitting, by the server, the retrieved virtual button information to the user device; displaying, by the user device, an operation requesting screen for receiving a table number when a specific button is selected by a user from a screen where the store virtual button information is displayed; receiving, by the user device, the table number by performing NFC tagging or capturing QR code; transmitting, by the user device, the received table number and button selection information to the server; and transmitting, by the server, to a staff device the table number and the button selection information.

### Advantageous Effects

In the present invention, unnecessary movement and time are not required since a paging object is transferred together when a customer present in a store pages a store staff. In addition, requests can be directly transferred by using an application installed on a user device so that, in a store, purchase of additional hardware and installation thereof on a table are not required.

In the present invention, a paging button customized to each store may be applied to various businesses since a store side can change requests that will be displayed on a virtual button according to a feature of the store when the virtual button is selected.

### Description of Drawings

FIG. 1 is a view showing an embodiment of a paging system using a virtual button according to the present invention.
FIG. 2 is a view showing an embodiment of a block diagram of a server according to the present invention.
FIG. 3 is a view showing an embodiment of a block diagram of a user device according to the present invention.
FIG. 4 is a view showing a flowchart of an embodiment of paging a store staff by using a virtual button application according to the present invention.
FIG. 5 is a view showing an embodiment of receiving a store code in a virtual button application according to the present invention.
FIG. 6 is a view showing an embodiment of requesting a service by using a virtual button according to the present invention.
FIG. 7 is a view showing an example embodiment of a selected button among virtual buttons according to the present invention.
FIG. 8 is a view showing an example embodiment when NFC tagging is failed in a virtual button application according to the present invention.
FIG. 9 is a view showing an embodiment where a user directly inputs his or her requests in the virtual button application according to the present invention.
FIG. 10 is a view showing an embodiment of operation of a staff device according to the present invention.
FIGS. 11 and 12 are views showing an embodiment of log-in operation according to the present invention.
FIG. 13 is a view showing an embodiment of setting a virtual button in a store according to the present invention.

### Description of the Reference Numerals in the Drawings

- 100:: staff device

- 200:: server
- 210:: server communication unit
- 220:: storage unit
- 230:: control unit
- 300:: user device
- 310:: communication unit
- 320:: camera unit
- 330:: display unit
- 340:: input unit
- 350:: storage unit
- 360:: control unit
- 400:: paging button
- 500:: store Bluetooth signal generator

### Mode for Invention

Hereinafter, preferred embodiments according to the present invention will be described in detail with reference to the accompanying drawings. The detailed description set forth below in conjunction with the appended drawings is intended to illustrate exemplary embodiments of the invention, and is not intended to represent the only embodiments in which the invention may be practiced.

However, the present invention is not limited to the exemplary embodiments set forth below, and may be embodied in various other forms. The present exemplary embodiments are for rendering the description of the present invention complete and are set forth to provide a complete understanding of the scope of the invention to a person with ordinary skill in the technical field to which the present invention pertains, and the present invention will only be defined by the scope of the claims.

In some instances, well-known structures and devices are omitted in order to avoid obscuring the concepts of the present invention and the important functions of the structures and devices are shown in block diagram form. The same reference numbers will be used throughout the drawings to refer to the same or like parts.

Through the whole document, the term "comprising or including" used in the document means that one or more other components, steps, operation and/or existence or addition of elements are not excluded in addition to the described components, steps, operation and/or elements unless context dictates otherwise.

In addition, in the following description, terms such as "unit" and "module" indicate a unit for processing at least one function or operation, wherein the unit and the block may be embodied as hardware or software or embodied by combining hardware and software. As used in the specification and appended claims, the terms "a", "an", "one", "the" and other similar terms include both singular and plural forms, unless context clearly dictates otherwise.

Specific terminologies used for the embodiments of the present invention may be provided to help the understanding of the present invention. Unless differently defined, all terms used herein including the technical or scientific terms, have the same meanings as the terms generally understood by those skilled in the art to which the present invention pertains. Moreover, the use of the specific terminology may be modified into other forms within the scope of the technical idea of the present invention.

Reference will now be made in detail to the preferred embodiments of the present invention with reference to the accompanying drawings. The detailed description, which will be given below with reference to the accompanying drawings, is intended to explain exemplary embodiments of the present invention, rather than to show the only embodiments that can be implemented according to the present invention.

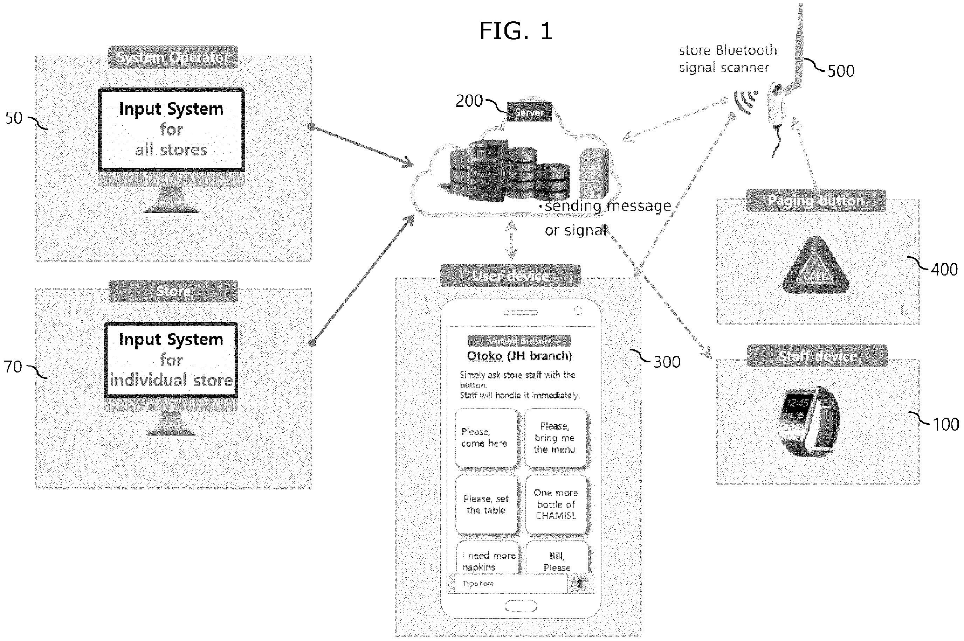

FIG. 1 is a view showing a configuration diagram of an embodiment of a paging system using a virtual button according to the present invention.

Referring to FIG. 1, a wired/wireless communication environment to which the present invention may be applied may be configured by including a staff device 100, a server 200, a user device 300, a paging button 400, and a store Bluetooth signal generator 500.

However, a wired/wireless network environment that will be described hereinbelow may include at least one of configuration elements of FIG. 1, but it is not limited thereto. In a wired/wireless communication network environment to which the present invention may be applied, at least one user device, at least one staff device, at least one paging button, at least one store Bluetooth signal generator, at least one server, and at least one network may be present, and each user device and a server may be connected by using other networks.

In the embodiment of the present invention, the staff device 100 and the user device 300 mean a device capable of transmitting and receiving communication signals, and, in the present invention, the staff device 100 and the user device 300 may be understood as a concept of including all devices capable of transmitting and receiving connection information of a wired or wireless router.

Herein, in the staff device 100 and the user device 300, at least one program or application may be installed. Particularly, an application may be included, the application including an application program interface (API) or embedded Software which is related to providing a paging signal including service requests by proving a virtual button that is an embodiment of the present invention.

The staff device 100 and the user device 300 may transmit and receive data or signal to/from the server 200 by itself or by using the at least one program or application installed therein. The transmitted or received data or signal may be a service requesting signal in association with a virtual button that is an embodiment of the present invention, and related to the same.

The user device 300 may include at least one of a smartphone, a personal computer (PC), a notebook computer, a tablet PC, a mobile phone, a video phone, an electronic book reader (E-book reader), a mobile medical device, a camera, a wearable device, a terminal, a mobile station (MS), a mobile subscriber station (MSS), a subscriber station (SS), an advanced mobile station (AMS), a wireless terminal (WT), machine-type communication (MTC) device, a machine-to-machine (M2M) device, and a device-to-device (D2D) device.

The staff device 100 may include a wearable device. According to various embodiments, the wearable device may include at least one of an accessory-type wearable device (for example, watches, rings, bracelets, anklets, necklaces, glasses, contact lenses, or head-mounted-devices (HMD)).

Of course, this is merely an example, a user device of the present invention may be understood in a concept of including all devices that are currently developed, commercialized, or capable of transmitting data or signals to be developed in addition to the above-mentioned examples.

Referring again FIG. 1, the server 200 means an object capable of transmitting and receiving data to/from at least one another device by using a wired or wireless communication environment, and the server 200 of the present invention may further include at least one of a relay server, an intermediate server, and a client server.

In addition, as an example of the server 200, a cloud server, an IP multimedia subsystem (IMS) server, a telephony application server, an instant messaging (IM) server, a media gateway control function (MGCF) server, a messaging gateway (MSG) server, a call session control function (CSCF) server may be included,. The server 200 may be implemented in a device referring to an object capable of transmitting and receiving data such as personal computer (PC), notebook computer, tablet PC, etc.

Meanwhile, a network may mean a data communication network for transmitting and receiving data between the staff device 100 and the user device 300, and the server 200, and the kind thereof is not particularly limited.

For example, the network may be an Internet protocol (IP) network providing transmission and reception service of large-scale data by using an IP or another all-IP network where other IP networks are combined.

In addition, in FIG. 1, the server 200 may perform communication with a system operator 50, and the system operator 50 may input information to the server 200 or edit information of the server 200 to operate overall management of the server 200. In addition, the system operator 50 may manage a version, and an upgrade of an application according to an embodiment of the present invention, and transfer edited information to the server 200. In addition, the system operator 50 may implement an input system for all entire stores registered in the server 200, and manage each store by using the same. For example, the system operator 50 may generate common buttons for the entire stores in advance, and store corresponding information in the server 200. Then, according to various embodiments, the system operator 50 may generate virtual buttons for events or advertisement according to a request of a store side, and provide the same. In addition, the system operator 50 may generate a basic format enabling a store side 70 to set virtual buttons, and provide the same to the server 200.

Based on a basic format provided from the system operator 50, a store side may input or edit information to the server 200. A store side 70 may edit and remove information within the server 200 or register new information under the authority assigned to the store side. For example, the store side 70 may remove a part of virtual buttons that are fundamentally provided, generate a virtual button including service contents that is frequently required in a store, and store the changed information in the server 200.

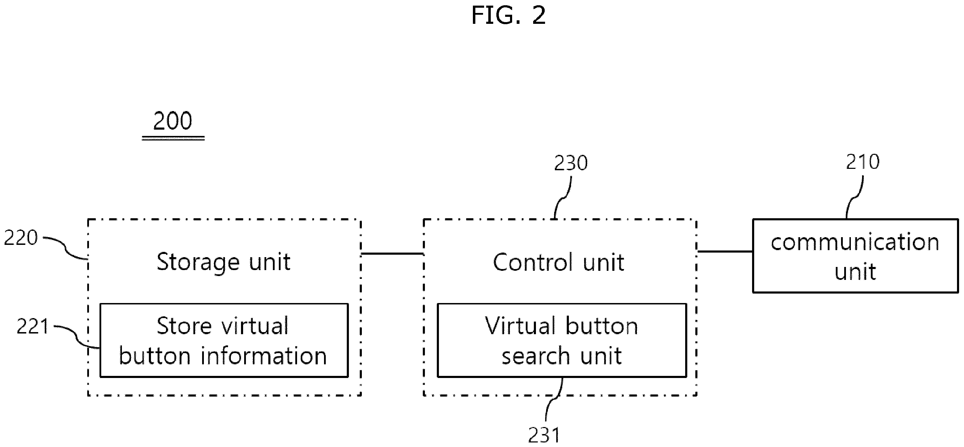

FIG. 2 is a view showing a block diagram of an embodiment of a server according to the present invention.

The server 200 may be configured by including a communication unit 210, a storage unit 220, and a control unit 230. In addition, in the storage unit 220, store virtual button information 221 may be included, and the control unit 230 may be configured with a virtual button search unit 231.

The communication unit 210 according to an embodiment of the present invention may perform communication between the staff device 100 and the user device 300. When the communication unit 210 receives an input signal of the virtual button from the user device 300, the communication unit 210 may transmit paging button ID (corresponding to a table number) and button selection information which are received from the user device 300 to a staff device 100 of the store in association with a corresponding signal. In addition, the communication unit 210 may receive store information of a store where a user is currently present when the user accesses the server 200 by using a virtual button application. In addition, the communication unit 210 may transmit virtual button information generated, by control of the control unit 230, by a store side where the user is present to the user device 300. Accordingly, the user may check virtual buttons of the store where he or she is present.

In the storage unit 220, operating systems, applications and general files may be stored. For example, in the storage unit 220, files related to providing a virtual button application to a user device 300 and operating systems may be stored. According to an embodiment of the present invention, in the storage unit 220, store virtual button information 221 may be included. The store virtual button information 221 may be generated by reflecting contents set in each store.

The control unit 230 may control overall operations performed in the server 200. The control unit 230 may refer to a processor, a controller, a microcontroller, a microprocessor, a microcomputer, etc. Meanwhile, the control unit 230 may be implemented in hardware or firmware, software, or in a combination thereof.

In case of implementing the embodiments of the present invention in the form of firmware or software, the method according to the embodiments of the present invention may be implemented in the form of a module, procedure, or function performing the above-described functions or operations. A software code may be stored in a storage unit 220 and driven by a control unit 230. Herein, the storage unit 220 may be located inside or outside of the user device 300 and the server 200, and the storage unit 220 may transmit and receive data to/from the control unit 230 by using a wide range of methods that have already been disclosed.

The control unit 230 according to an embodiment of the present invention may determine store information where the user device 300 executing a virtual button application is positioned, and search for store virtual button information 221 in association with the corresponding store. In addition, the control unit 230 may transfer retrieved store virtual button information 221 to the user device 300 so as to support a user to use virtual buttons corresponding to each store in a specific store. In addition, when a user using a virtual button application request a service to a store by pressing a virtual button, the control unit 230 may receive a signal for the corresponding request and transmit the same to a staff device of the store.

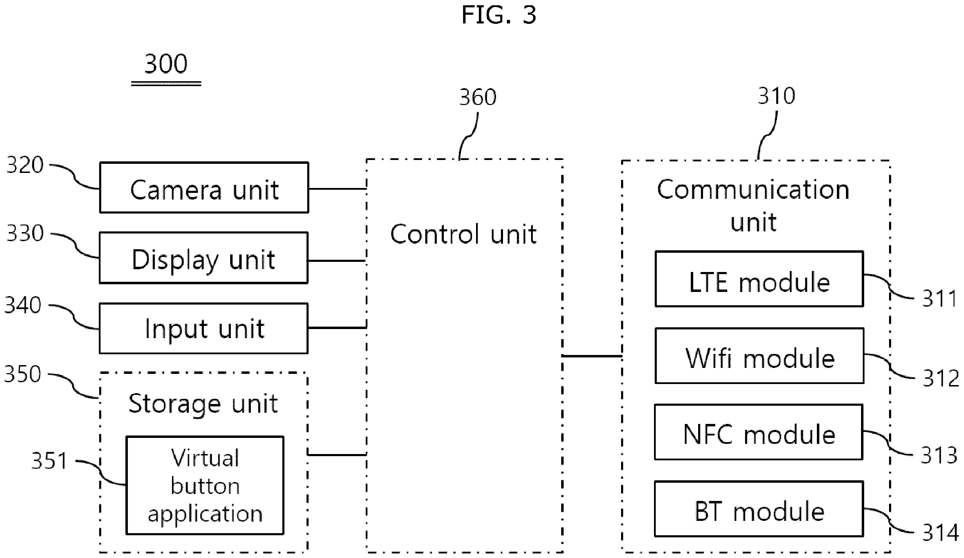

FIG. 3 is a view showing a block diagram of an embodiment of a user device according to the present invention.

A user device 300 may be configured by including a communication unit 310, a camera unit 320, display unit 330, input unit 340, storage unit 350, and a control unit 360. In addition, in the storage unit 350, a virtual button application 351 may be stored.

The communication unit 310 may perform wired/wireless communication between other electronic devices and a server. The communication unit 310 according to an embodiment of the present invention may receive information of a store code, paging button ID, etc. which is provided from the store, and perform communication with the server 200. The communication unit 310 may include an LTE module 311. In addition to the LTE module 311, the communication unit 310 may, for example, use at least one of, for example, long-term evolution (LTE), LTE-advanced (LTE-A), code division multiple access (CDMA), wideband CDMA (WCDMA), universal mobile telecommunications system (UMTS), wireless broadband (WiBro), and global system for mobile communications (GSM), etc., as a cellular communication protocol. In addition, the communication unit 310 may include a module performing near field communication. The module performing near field communication may correspond to a wireless fidelity (WiFi) module 312, a near field communication (NFC) module 313, and a Bluetooth 314. In addition, the communication unit 310 may further include, although it is not shown in the figure, a global navigation satellite system (GNSS). The GNSS may include at least one of, for example, a global positioning system (GPS), a global navigation satellite system (Glonass), a Beidou Navigation Satellite System (hereinafter "Beidou"), and a European global satellite-based navigation system (Galileo), according to a use area, a bandwidth, or the like. In the disclosure, the term "GPS" may be interchangeably used with the term "GNSS." Hereinafter, in the present description, a wired communication may include at least one of, for example, universal serial bus (USB), high definition multimedia interface (HDMI), recommended standard232 (RS-232), and plain old telephone service (POTS). The network may include at least one of communication networks, such as a computer network (for example, a local area network (LAN), or a wide area network (WAN)), the Internet, and a telephone network, or the like.

The camera unit 320 is a device that is capable of capturing, for example, a still image and a video image, and according to one embodiment, the camera unit 320 may include at least one image sensor (for example, a front sensor or a rear sensor), a lens, an image signal processor (ISP), or a flash (for example, LED or xenon lamp).

The camera unit 320 according to an embodiment of the present invention may capture a QR code provided by a store side, and transfer image information of the same to the control unit 260. The QR code may be used as an event for executing a virtual button application, or for transmitting a service request corresponding to a specific button selected by a user from a virtual button application.

The display unit 330 may include, for example, a liquid crystal display (LCD), a light emitting diode (LED) display, an organic light emitting diode (OLED) display, a micro electro mechanical system (MEMS) display, or an electronic paper display. The display unit 330 may display various types of contents (for example, text, images, videos, icons, or symbols) for users. The display unit 330 may include a touch screen and receive, for example, a touch input, a gesture input, a proximity input, or a hovering input using an electronic pen or a user's body part. In addition, the display unit 330 may be implemented to be flexible, transparent, or wearable.

The input unit 340 may function to transfer a command or data input from a user or from an external device to another configuration element. The input unit 340 may include, for example, a touch panel, a (digital) pen sensor, a key, or a microphone. The touch panel may be at least one selected from among a capacitive touch panel, a resistive touch panel, an infrared touch panel, and an ultraviolet touch panel. In addition, the touch panel may further include a control circuit. The touch panel may further include a tactile layer configured to provide a tactile response to a user. The (digital) pen sensor may be a part of the touch panel or may include a separate recognition sheet. The key may include a physical button, an optical key, or a keypad. The input unit 340 may include a microphone for inputting a user voice and other sounds. When the input unit 340 is implemented in a touch screen form, the input unit 340 may perform a function of the display unit 330 in one area thereof.

The input unit 340 according to an embodiment of the present invention may receive a selection input of a user who has selected a virtual button. In addition, the input unit 340 may receive a text input that is input by the user when the user wants to directly input his or her requests while a virtual button application 351 is in progress. In addition, the input unit 340 may receive an articulation message of the user by using a microphone when the user wants to directly input his or her requests with voice while a virtual button application 351 is in progress, and transfer the same to the control unit.

The storage unit 350 may include an internal memory or an external memory. The internal memory may include at least one selected from among a volatile memory, a non-volatile memory, a flash memory, and hard disk drive (HDD). The external memory may include a flash drive, for example, compact flash (CF), secure digital (SD), micro secure digital (micro-SD), mini secure digital (mini-SD), extreme digital (xD), multi-media card (MMC), or memory stick. The external memory may be functionally or physically or both connected to the electronic devices via various interfaces.

In the storage unit 350 according to an embodiment of the present invention, a virtual button application 351 may be stored. In the storage unit 350, store code information within beacon information that is received from a Bluetooth signal generator installed in the store may be temporarily stored when a user device has been moved to a specific store.

The control unit 360 may control overall operations of the user device 300. According to an embodiment of the present invention, the control unit 360 may control operation related to executing a virtual button application 351. For example, the control unit 360 may control to transfer a store code to the server 200 when the store code is transmitted from a store Bluetooth signal generator. Then, the server 200 may search for store virtual buttons corresponding to the store code, and transmit the same to the user device 300. Accordingly, the control unit 360 may control the display unit 330 to display the same.

In addition, when a user selects a specific virtual button while a virtual button application is in progress, the control unit 360 may perform series of operation for transferring to a staff device a service requesting message in association with the corresponding button.

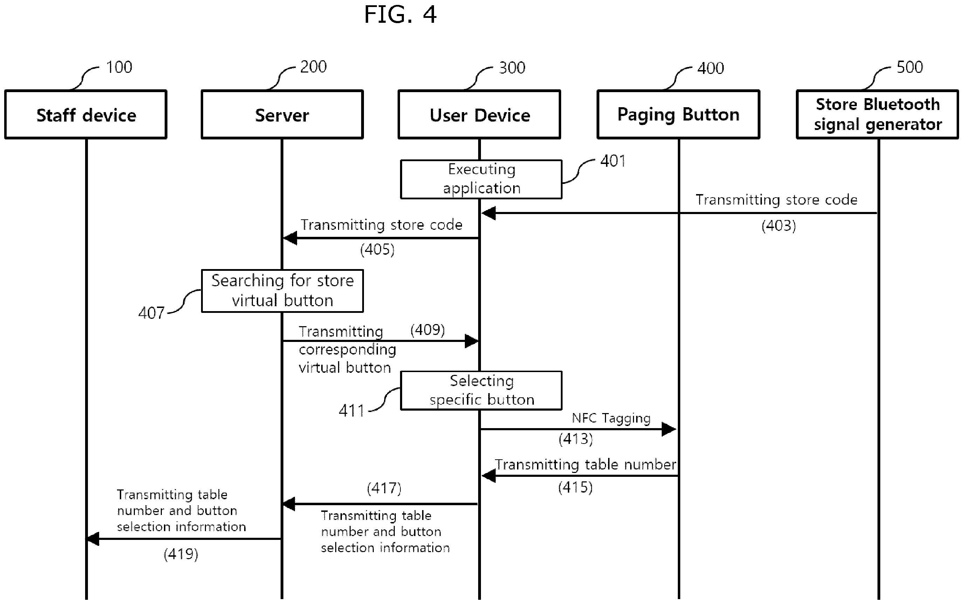

FIG. 4 is a view showing a flowchart of an embodiment of paging a store staff by using a virtual button application according to the present invention.

Referring to FIG. 4, a service requesting system using a virtual button application may be configured by including a staff device 100, a server 200, a user device 300, a paging button 400, and a store Bluetooth signal generator 500.

In an embodiment a system according to the present invention, an order of using a virtual button is as follows. First, the user device 300 may perform 401 operation of executing a virtual button application. Herein, it is assumed that the user has entered a specific store so that he or she is present within a signal range of the store Bluetooth signal generator 500. In addition, the store Bluetooth signal generator 500 may transfer a beacon signal to devices present within a signal range at a predetermined temporal interval. Herein, the beacon signal may perform a function of displaying messages on a user device in association with a store related application (for example, membership app). An embodiment of the store Bluetooth signal generator 500 according to the present invention may transmit to the user device 300 a beacon signal including a store code.

However, according to various embodiments of the present invention, even if the Bluetooth signal generator 500 is not present, a store code may be transferred to the user device 300 by using various methods. For example, the user device 300 may receive a store code from a device transmitting data by using a NFC method. Herein, the user device 300 may perform NFC communication by being physically in contact with the device. The device performing the NFC communication may be present at an area of the store, or may be a specific device provided in a table. Alternatively, a device transmitting a store code by using an NFC communication may be, for example, a paging button.

In addition, the user device 300 may receive a store code by recognizing a QR code provided within the store. In addition, the user device 300 may receive a store code by using various methods.

When the user device 300 receives a store code, the user device 300 may perform 405 operation of transmitting the received store code to the server 200 providing a virtual button application.

After the above operation, the server 200 may perform 407 operation of searching for a store virtual button based on the received store code. Herein, the server 200 may perform 409 operation of transmitting to the user device 300 a virtual button in association with the received store code. According to the above operation, for example, on the user device 300, a message that the corresponding store has been recognized may be displayed after the virtual button application is executed and the store code is transmitted, and a virtual button image of the corresponding store may be displayed on a display unit.

When a virtual button of the corresponding store is transferred to the user device 300, the virtual button may be displayed on a screen of the user device 300. Then, the user performs 411 operation of selecting a specific button among the virtual buttons, and performs 413 operation of performing NFC tagging by approaching the user device 300 to the paging button 400 of the store. Herein, NFC tagging operation may be performed by an NFC module included in the paging button 400. Herein, 415 operation of transferring ID information of the paging button 400 to the user device 300 by the NFC module may be performed.

The user device 300 may recognize the contact between the user device 300 and the paging button 400 as an event performed by the user for paging a store staff by using the virtual button. Accordingly, when a specific button is selected from the virtual buttons displayed on a screen of the user device 300, the user device 300 may not transmit a corresponding signal immediately to the server 200, and transmit a signal to the server 200 by recognizing a paging event when contact with the paging button 400 provided in the table occurs.

Accordingly, when the user device 300 receives a paging button ID in association with a table number that is in contact with the user device 300, the user device 300 may perform 417 operation of transmitting the received paging button ID (table number) and button selection information (for example, give me some water) to the server. In addition, the server 200 may perform 419 operation of transmitting to the staff device 100 the received paging button ID (table number) and the button selection information.

In addition, service requesting operation using a virtual button may be performed by using various methods of using a signal transferring order. For example, a user may receive a store code and information corresponding to a table number by performing NFC tagging, receiving a beacon signal generated by the paging button, or by recognizing a QR code when the user enters the store and sits at a specific table. Herein, the user device 300 may receive a staff paging request and requests of the user by detecting touch of a specific virtual button on a virtual button application without being in contact with the paging button 400 whenever the user wants to input a service request. According to various embodiments, a device transmitting a table number by performing, in addition to performing NFC tagging with the user device 300, various near field communication methods (for example, receiving a beacon signal using a Bluetooth, Zigbee communication, etc.) may be a paging button 400 provided on the table. In addition, according to various embodiments, a QR code in a sticker form may be present at one side of the paging button 400 or at one side of the table, and the user device 300 may receive a table number by recognizing the QR code.

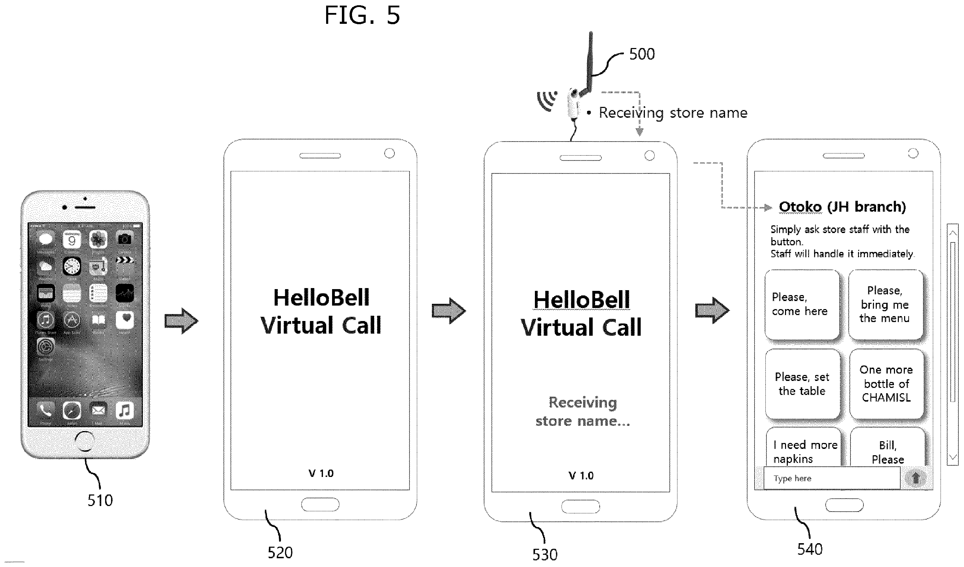

FIG. 5 is a view showing an embodiment of receiving a store code in a virtual button application according to the present invention.

First, in 510, a background screen of a user device 300 is shown. When an icon of a virtual button application is selected and executed in the user device 300, in a display unit of the user device 300, an intro screen may be displayed as shown in 520. Then, a user of the user device 300 may enter a specific store, and the user device 300 may receive a store code from a store Bluetooth signal generator 500. Herein, when receiving the store code, a screen as shown in 530 may be displayed. Referring to 530, in the display unit of the user device 300, a statement of "receiving a store name in progress" may be displayed. Then, when the store code is received, the user device 300 may display virtual button information of the corresponding store as shown in 540. When the corresponding store has not input virtual button information thereof to a server 200, the server 200 may transmit to the user device 300 virtual button information of a basic format. Virtual buttons may be configured with services frequently required by a user such as "Please, come here", "Please, bring me the menu", "I need a table setting", etc.

In the above, a situation where the user device 300 receives a signal from an apparatus of a specific store by using a near field communication module has been described. However, there may be a case where a store code has been changed or a store code is not received further. Since a user does not continuously stay at a specific store, the user device 300 may recheck a store code every preset time, and transmit to the server information that a store code has been changed or a store code is not further received. In other words, when the user device 300 receive a store code by a store Bluetooth signal generator 500 or by using other various methods when the virtual button application is in progress, the user device 300 determines as a check-in state, and maintains the check-in state for a preset time. In addition, the user device 300 may newly check a store code after elapsing the preset time. Herein, when the user device 300 is positioned out of a range capable of receiving a store code, the user device 300 requests to the server200 for releasing the check-in state, and the server 200 may release the check-in state so that virtual button information of the corresponding store may not be provided.

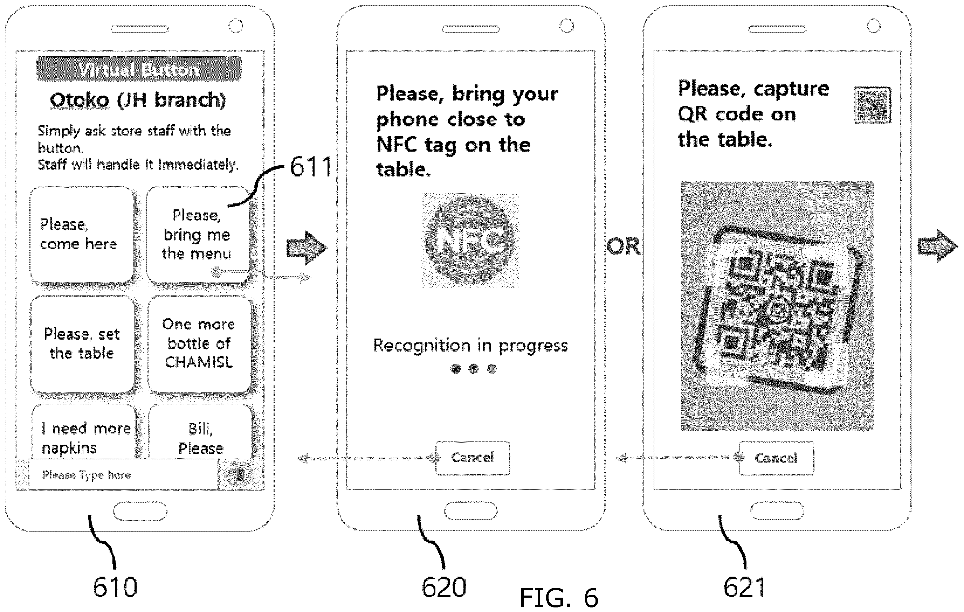

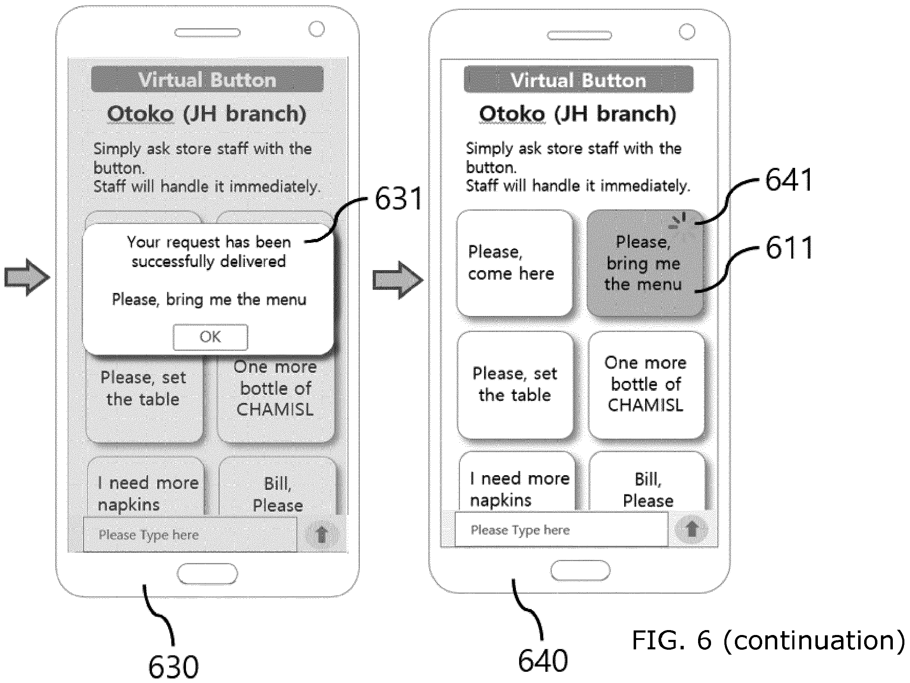

FIG. 6 is a view showing an embodiment of requesting a service by using a virtual button according to the present invention.

Referring to 610, a user may select a specific button 611 from virtual buttons displayed on the user device 300. The button 611 is a button including a service of 'Please, bring me the menu'. The user device 300 may display an NFC tagging waiting screen after the button 611 has been selected in the application as shown in 620. In addition, the user device 300 may display a cancel button together on a screen of 620, and when the user selects a cancel button, the user device 300 may return to a screen displaying a virtual button list.

According to various embodiments, as shown in 621, the user device 300 may be required to capture a QR code rather than being required to perform NFC tagging with a paging button 400 after a specific button is selected. For example, the QR code may be provided in one side of a table of the store, or in one side of the paging button 400. When the paging button 400 does not provide an NFC function, an image of the QR code may be attached thereon. In addition, the QR code may include table ID information.

The user device 300 may transfer a message corresponding to the selected button as shown in 630 after performing NFC tagging with the paging button 400 or capturing the QR code according to screen 620 or 621. Then, the user device 300 may display a message window 631 that representing that a service corresponding to the selected button has been transmitted. Then, the user device 300 may change the selected button 611 and non selected buttons in color as shown in 640 so that the buttons are distinguished. According to various embodiments, the user device 300 may additionally output an animation effect 641 representing that the service of the selected button 611 is being required.

In addition, according to various embodiments, the user device 300 may directly display a screen of 640 after 620 or 621.

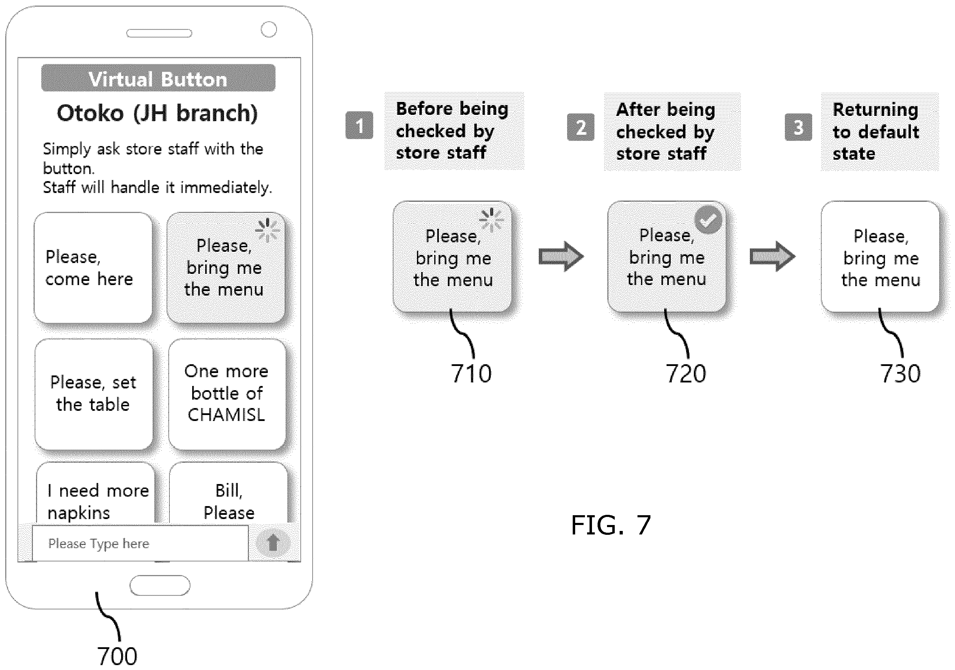

FIG. 7 is a view showing an example embodiment of a selected button among virtual buttons according to the present invention.

As shown in 700 of FIG. 7, when a virtual button list is displayed and a specific virtual button is selected, a user device 300 may differently display a part of the selected button. As an example, as shown in 710, the user device 300 may additionally output an animation effect wherein a part of the selected button changes in at least one of a shape or color according to a time flow. The animation effect may be output until a store staff checks the transferred request of ("Please, bring me the menu"). When the store staff checks the transferred request, the user device 300 may display a sign on a part of the virtual button that the store staff has checked the request as shown in 720. Then, the user device 300 may output the selected virtual button to return to a default state as shown in 730 after elapsing a preset time.

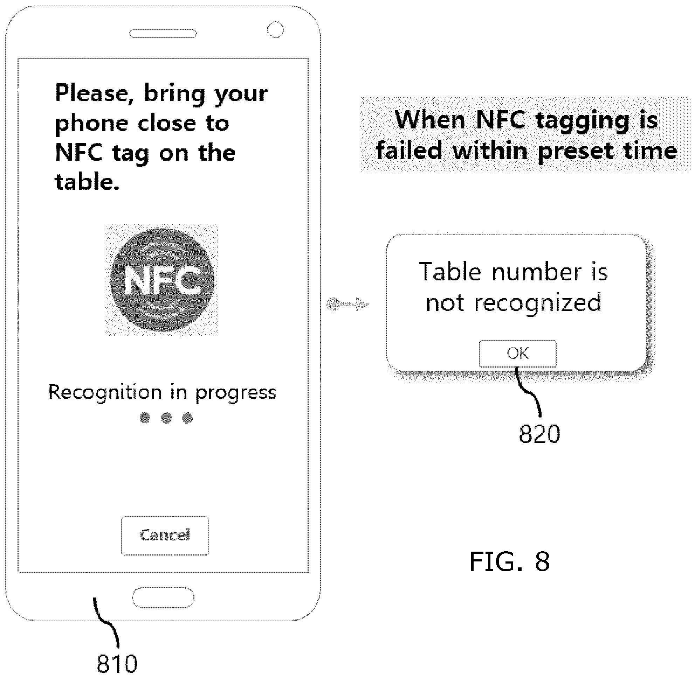

FIG. 8 is a view showing an example embodiment when NFC tagging is failed in a virtual button application according to the present invention.

When a virtual button is selected, a user device 300 may receive information of a paging button ID corresponding to a table number by performing NCF tagging with a paging button 400 installed on the table. Herein, the user device 300 may display a screen of 810 that requests NFC tagging on a display unit. However, herein, when the user device 300 does not receive information through NFC tagging within a preset time, the user device 300 may display a notice message as 820.

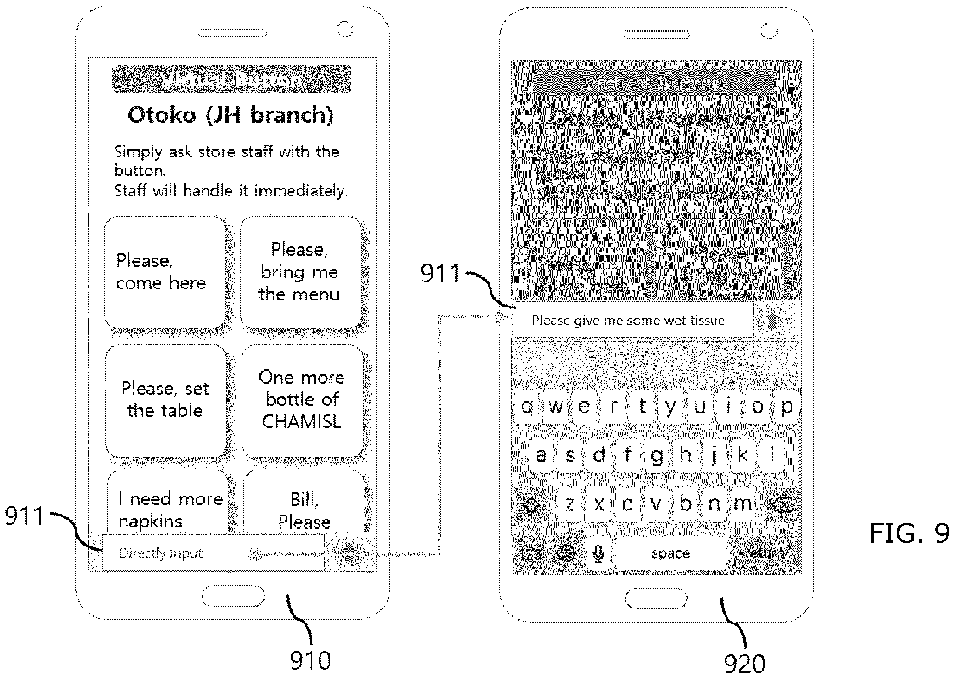

FIG. 9 is a view showing an embodiment where a user directly inputs his or her requests in the virtual button application according to the present invention.

A screen of a virtual button list shown in 910 may include, in addition to virtual buttons, an input window 911 for directly receiving user requests and transferring the input requests. When a user clicks or touches inside the input window 911, a key pad may be displayed on a screen as shown in 920. The input window 911 may be provided for receiving user requests input from the user when desired user requests is not present in a virtual button list.

Although it is not shown in the figure, according to various embodiments of the present invention, a message directly input from the user may be input by using a keypad as well as by using a microphone. For example, a user may press the input window 911 for a preset time or more so as to enter into a voice receiving mode being capable of receiving a voice input. Alternatively, the user may enter into a voice receiving mode by inputting a specific button that may be displayed within the input window 911. In addition, the user may enter into a voice receiving mode by using various methods. In a voice receiving mode, what the user says may be input to the user device. Then, the user message input by using the input window 911 or by the microphone may be transferred to a server after the paging button ID has been received. In addition, according to various embodiments, the user message input by using the microphone may be displayed in an area other than the input window 911.

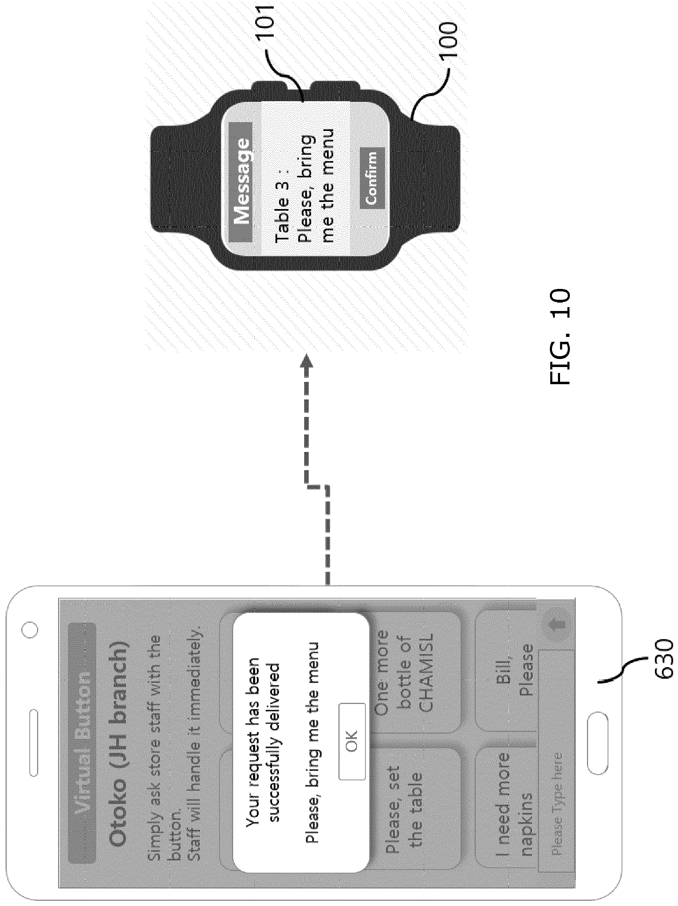

FIG. 10 is a view showing an embodiment of operation of a staff device according to the present invention.

630 is a screen showing that a button of "Please, bring me the menu" is selected from virtual buttons in a user device 300, and has been transferred to a staff device 100. Herein, a message window notifying that the request has been completely transferred may be displayed on the user device 300. Herein, the table number and the user requests may be displayed together on a screen 101 the staff device 100.

Although it is not shown in the figures, according to various embodiments, when multiple virtual button signals are received in the staff device 100, the multiple virtual button signals may be displayed in a list on the screen 101 according to an occurrence order. Then, the store staff may check by selecting a specific requirement message from the list, and then sequentially check other messages.

Then, a "Confirm" button shown in a lower part of the screen 101 may be selected to remove a corresponding requirement message when a response for customer service request has been completed.

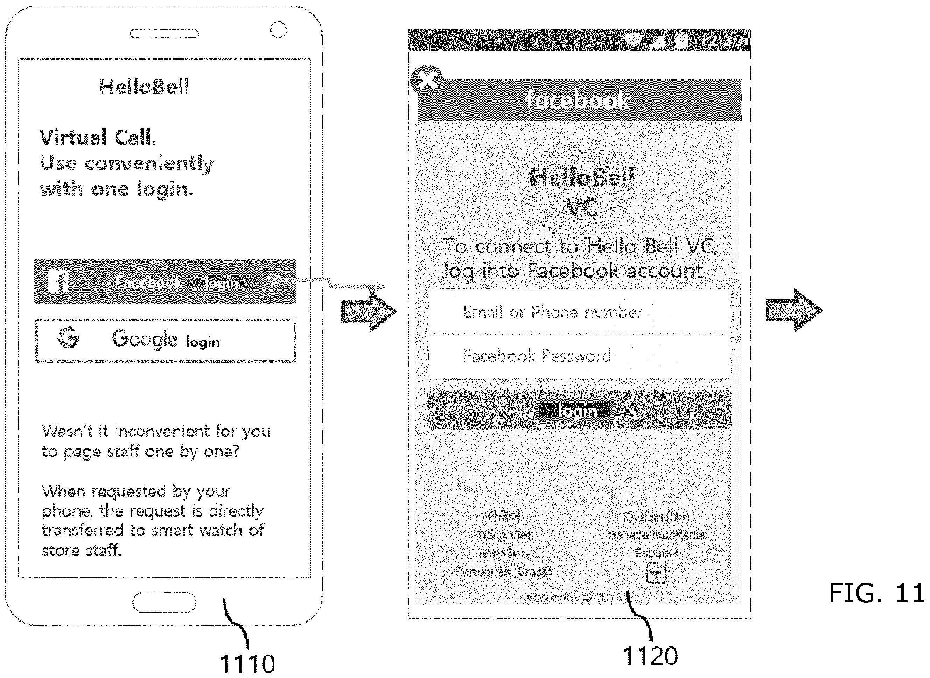

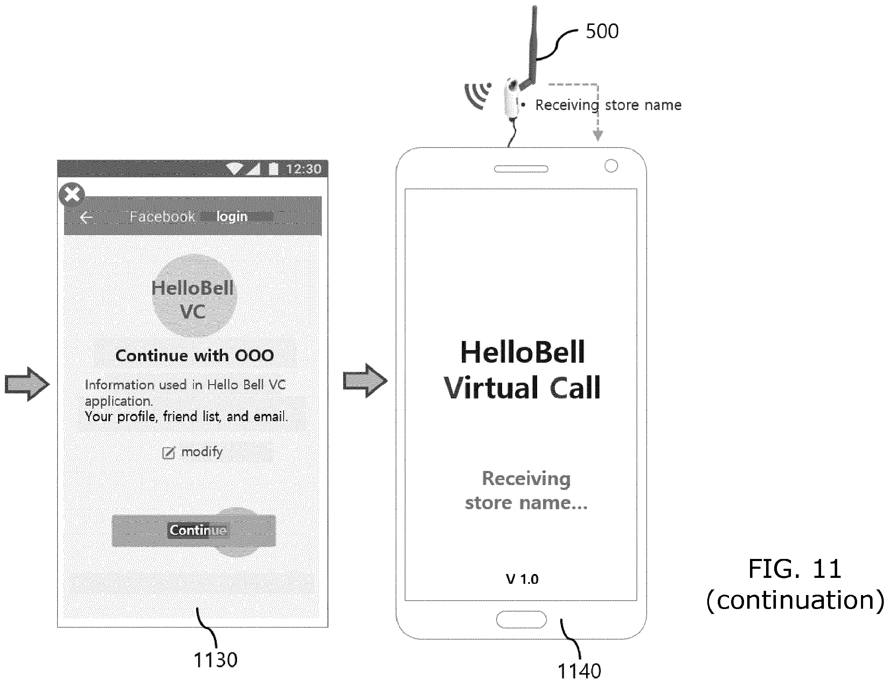

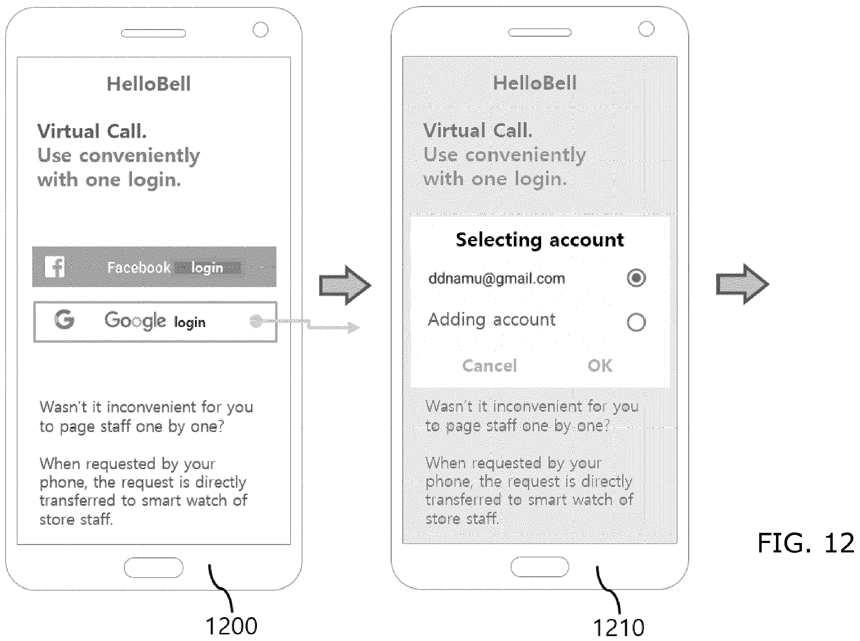

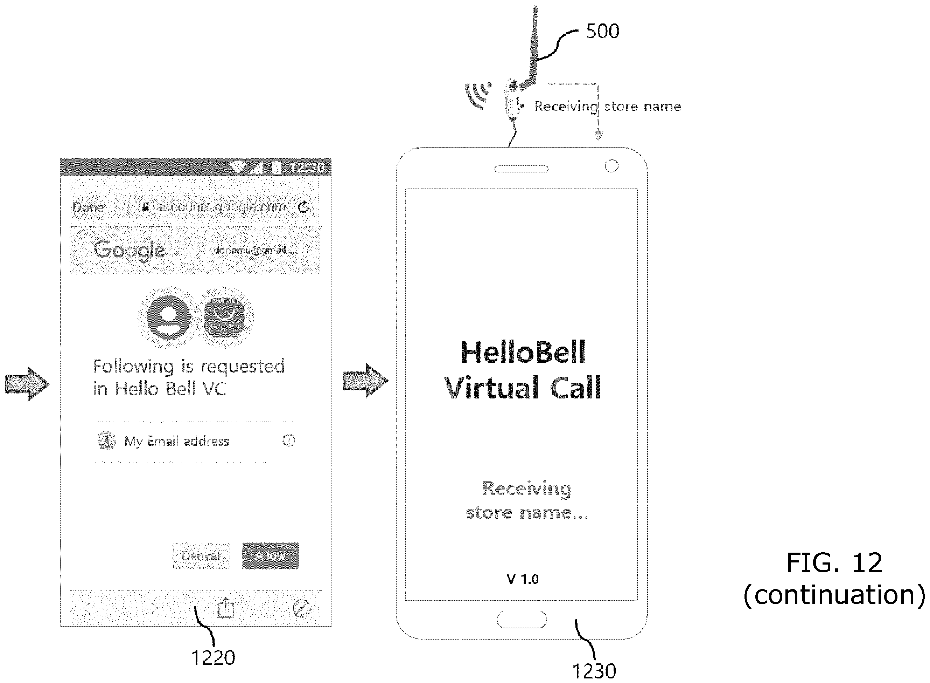

FIGS. 11 and 12 are views showing an embodiment of log-in operation according to the present invention.

A process of log-in may be performed in the user device 300 to execute a virtual button application. Referring to 1110, according to an embodiment of the present invention, the virtual button application may perform log-in by using an account pre-stored in another server. As shown in 1120, an input window for inputting an ID and a password for accessing the corresponding server may be displayed. As shown in 1130, when a user that is a member of the another server is authenticated and the virtual button application according to an embodiment of the present invention is continuously in progress by using the corresponding information, the user device 300 may receive a store name as shown in 1140. The user device 300 may obtain the store name by receiving a beacon signal generated by a Bluetooth signal generator installed within the store.

Similar to FIG. 11, in FIG. 12, a process of log-in for executing a virtual button application is shown.

A user may select another server type (for example, Google) that will use for logging-in in 1200. Then, a selection list for selecting an account in association with sever type selected by the user may be displayed in the user device 300 as shown in 1210. Herein, a user account ID that is currently logged-in and pre-stored in the user device 300 may be displayed on the selection list. Herein, when the user selects a user account that is currently logged-in, the user device 300 may receive a store name as shown in 1230 when the user proceed with the consent process of personal information utilization as shown in 1220.

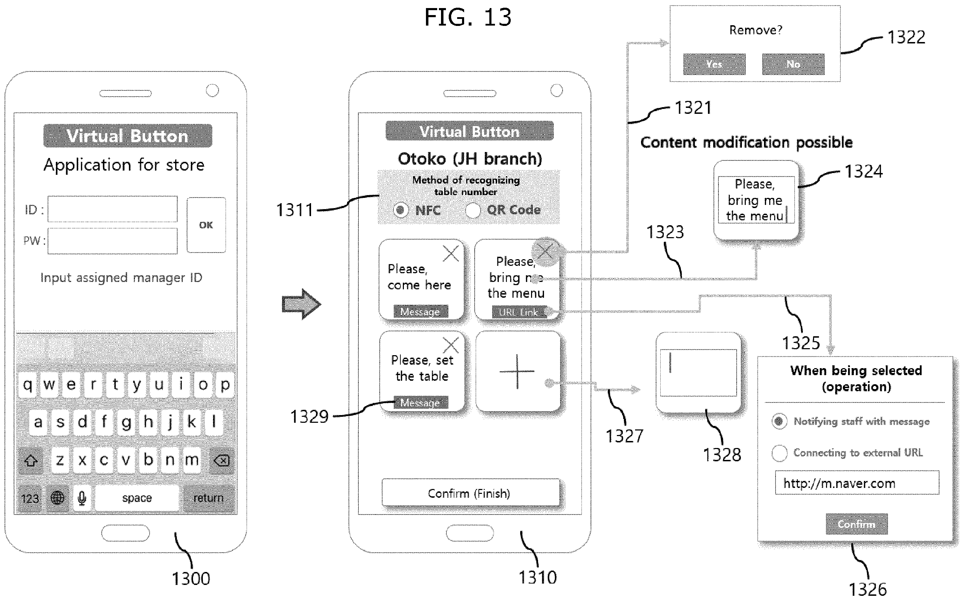

FIG. 13 is a view showing an embodiment of setting a virtual button in a store according to the present invention.

In an embodiment of a virtual button application according to the present invention, a virtual button list that is fundamentally provided regardless of stores may be present. In addition, a user may transmit a virtual button signal to a store by using a virtual button that is fundamentally provided by accessing the virtual button application. However, according to various embodiments, a store side may change service requirement for each virtual button customized to the store. For this, a server 300 may additionally provide a store input program.

Referring to FIG. 13, in a store device, as shown in 1300, a log-in screen for a store input program may be displayed. Herein, an input ID and password may be a store ID preset and assigned from a server 200.

When a log-in process is completed, in the store device, as shown 1310, a virtual button editing screen may be displayed. According to log-in information, a store code (or store name, address information, etc) may be displayed on the screen together. In addition, in the store device, a set area 1311 for setting an input method of a table number may be displayed with the virtual button editing screen.

In addition, for the store device, newly adding or removing a virtual button to/from the virtual button editing screen may be available. For example, by selecting an 'X' mark as shown in 1321, a message window inquiring whether or not to remove the selected virtual button may be displayed as shown in 1322. In addition, when a text displaying area within a button is selected as shown in 1323, an input window for changing the corresponding text may be displayed as shown in 1324, and the store side may change a requirement sentence by using the same.

In addition, operation performed when a virtual button is selected from the virtual button editing screen may be set. When an area displaying an operation type is selected as shown in 1325, a store manager may select operation to be performed when the corresponding virtual button has been selected such as "Notify staff of a message" and "Connecting to external URL" as shown in 1326. For example, the 'Connecting to external URL' may be a function of supporting an external URL displaying a menu image to be displayed on a user device 300 rather than sending a staff in association with "Please, bring me the menu". In addition, functional information that is selected according to the above may be displayed on a part of the virtual button as shown in 1329. The 1329 may not be displayed on the user device 300, and may be only displayed on the virtual button editing screen.

In addition, as shown in 1327, selecting an area with "+" mark may be operation of adding a virtual button. Accordingly, in the virtual button editing screen, a new input window such as 1328 may be displayed in association with selecting the area of 1327. The staff manager may configure requirements corresponding to the newly added virtual button on a new input window of 1328.

A paging button is used, in addition to restaurants, in various places such as sanatoriums, hospitals, schools, industries, etc. In other words, when a paging button is used in the above described places other than restaurants, requirement content filled in a virtual button according to an embodiment of the present invention has to be changed together. For this, a server 200 according to an embodiment of the present invention may provide a virtual button editing program to a store side, and the editing program may correspond to 70 of FIG. 1.

When a paging button according to an embodiment of the present invention is used in a sanatorium, the sanatorium side may change requirement input in a virtual button to "Emergency situation", "Request for a meal", etc. by using the editing program. As described above, according to various embodiments of the present invention, a virtual button application may support to provide a service customized to a place where the application is used by changing requirement contents corresponding to each button.

The description suggests the best mode of the present invention to provide an example that explains the present invention and also enables one skilled in the art to manufacture and use the present invention. The specification drafted as such is not limited to detailed terms suggested in the specification. Accordingly, it will be apparent to those skilled in the art that various modifications, changes, and variations may be made in the example without departing from the scope of the invention. For example, in order to achieve the effect intended by the present invention, it is to be noted that all the functional blocks shown in the attached drawing may not be needed to achieve the effect desired by the present disclosure and even that case may be included in the technical scope of the present disclosure defined by the appended claims.

## Claims

1. A system for requesting a service by using a virtual button, the system comprising:
a Bluetooth signal generator transferring a store code to a user device;
a user device executing a virtual button application, retransmitting the store code to a server when receiving the store code while the virtual button application being operated, receiving from the server virtual buttons in association with the store code, displaying an operation requesting screen for receiving a table number when one button is selected from the virtual buttons, and receiving the table number and button selection information and providing the same to the server;
a server searching for virtual buttons in association with the store code received from the user device and transmitting the same to the user device a, and transmitting to a staff device the table number, the button selection information when the same is received;
a staff device receiving from the server the table number and the button selection information; and
a paging button transmitting the table number to the user device.

2. The system of claim 1, wherein paging button includes an NFC module therein, and the user device displays a screen requesting NFC tagging after the virtual button having been selected, and receives information of the table number by receiving a paging button ID through NFC tagging when NFC tagging is performed.

3. The system of claim 1, wherein the paging button includes a QR code including the table number and attached at one side thereof, and the user device displays a screen requiring capturing of the QR code after the virtual button having been selected, and receives the corresponding table number from the paging button when the QR code is captured.

4. The system of claim 1, wherein the paging button includes a Bluetooth module transmitting to the user device a Bluetooth signal including at least one of a store code and a table number, and the user device provides to the server information of button selection information and table number information when the virtual button is selected while the user device receives the Bluetooth signal including the table number.

5. The system of claim 1, wherein the user device displays on a side where the virtual button is displayed an input window enabling a user to directly input his or her requests.

6. The system of claim 1, wherein the user device displays a screen where the virtual button is displayed in a distinguishable manner before and after the virtual button is selected, and when a specific virtual button is selected, displays a state in a distinguishable manner before and after a store staff checks for the selection.

7. The system of claim 1, wherein the server includes:
a storage unit storing information of virtual buttons of multiple stores which corresponds to respective stores; and
a virtual button search unit searching for information of a store virtual button matched with a received store code when the store code is received from the user device.

8. The system of claim 1, wherein the staff device displays respective requests in a list form according to a signal occurrence order when multiple requests are generated by using the virtual button.

9. The system of claim 1, wherein when a request of executing the virtual button application is generated, the user device displays a log-in screen, requests for selecting another server type and account information used for performing log-in, and receives a store code received from the Bluetooth signal generator when the account information is confirmed from a user.

10. The system of claim 1, wherein the server stores an editing program enabling a store side to edit the virtual button, and the editing program includes at least one of a function of selecting NFC tagging or QR code recognition as a method of recognizing the table number, a function of changing service requests corresponding to the virtual button, a function of adding and removing the virtual button, and a function of selecting an operational type operated when the virtual button is selected.

11. The system of claim 10, wherein the operational type that is operated when the virtual button is selected includes at least one of transmitting to the staff device requests in association with the corresponding button as a message, and connecting to an external URL for providing the request in association with the corresponding button.

12. A method of requesting a service, the method comprising:
executing, by a user device, a virtual button application;
receiving, by the user device, a store code included in a beacon signal generated by a Bluetooth signal generator;
searching, by a server, for store virtual button information corresponding to the store code when the store code is received from the user device;
transmitting, by the server, the retrieved virtual button information to the user device;
displaying, by the user device, an operation requesting screen for receiving a table number when a specific button is selected by a user from a screen where the store virtual button information is displayed;
receiving, by the user device, the table number by performing NFC tagging or capturing a QR code;
transmitting, by the user device, the received table number and button selection information to the server; and
transmitting, by the server, to a staff device the table number and the button selection information.
